**Europäisches Patentamt**

**European Patent Office**

**Office européen des brevets**

(19)

(11) Numéro de publication: **0 287 455 B1**

(12) # FASCICULE DE BREVET EUROPEEN

(45) Date de publication du fascicule du brevet:
**22.08.90**

(51) Int. Cl.⁵: **F16F 13/00**

(21) Numéro de dépôt: **88400880.6**

(22) Date de dépôt: **12.04.88**

(54) Support hydroélastique, notamment pour la suspension d'un moteur de véhicule.

(30) Priorité: **13.04.87 FR 8705226**

(43) Date de publication de la demande:
**19.10.88 Bulletin 88/42**

(45) Mention de la délivrance du brevet:
**22.08.90 Bulletin 90/34**

(84) Etats contractants désignés:
**DE GB IT SE**

(56) Documents cités:
**EP-A- 0 005 730**
**EP-A- 0 278 798**
**DE-A- 3 414 547**
**US-A- 2 562 195**
**US-A- 4 721 291**

**PATENT ABSTRACTS OF JAPAN,**
vol. 11, no. 289 (M-625)[2736], 18 septembre 1987;
JP-A-62 83 525 (TOYO TIRE & RUBBER CO. LTD) 17-04-1987
**PATENT ABSTRACTS OF JAPAN,**
vol. 9, no. 322 (M-440)[2045], 18 décembre 1985, page 137 M 440; & JP-A-60 157 538 (TOUKAI GOMU KOGYO K.K.) 17-08-1985
**PATENT ABSTRACTS OF JAPAN,**
vol. 8, no. 140 (M-305)[1577], 29 juin 1984, page 33 M 305;

(73) Titulaire: **AUTOMOBILES PEUGEOT, 75, avenue de la Grande Armée, F-75116 Paris(FR)**
Titulaire: **AUTOMOBILES CITROEN, 62 Boulevard Victor-Hugo, F-92200 Neuilly-sur-Seine(FR)**

(72) Inventeur: **Le Foi, Marcel, 12, Impasse du Verger Domloup, F-35410 Châteaugiron(FR)**

(74) Mandataire: **Moncheny, Michel et al, c/o Cabinet Lavoix 2 Place d'Estienne d'Orves, F-75441 Paris Cedex 09(FR)**

(56) Documents cités: (suite)
**& JP-A-59 37 348 (TOUKAI GOMU KOGYO K.K.) 29-02-1984**
**PATENT ABSTRACTS OF JAPAN,**
vol. 10, no. 18 (M-448)[2075], 24 janvier 1986, page 21 M 448; & JP-A-60 176 802 (TOYOTA JIDOSHA K.K.) 10-09-1985

ACTORUM AG

## Description

La présente invention se rapporte aux supports élastiques destinés à être interposés entre un ensemble mécanique vibrant, par exemple un groupe moto-propulseur de véhicule, et un autre ensemble, par exemple une structure de ce même véhicule.

De façon plus précise, l'invention s'applique à tous les supports élastiques du type comprenant un corps en matériau élastomère de forme annulaire disposé entre deux armatures dont l'une est adaptée pour être reliée à l'un des deux ensembles et dont l'autre est adaptée pour être reliée à l'autre ensemble, par l'intermédiaire d'une pièce de fixation qui traverse le support de part en part suivant son axe, le support comportant de plus une chambre de travail annulaire remplie de fluide et délimitée en partie par le corps en matériau élastomère et une chambre d'expansion également remplie de fluide, séparée de la chambre de travail par une cloison rigide délimitant au moins un passage de communication entre les deux chambres, la chambre de travail annulaire étant delimitée radialement vers l'intérieur par une paroi épaisse du corps en matériau élastomère. (document JP-A 60 176 802).

On sait que ces supports à axe traversant, présentent, du fait de leur conception, une raideur propre plus grande que les supports comparables ne comportant pas d'axe traversant.

L'invention a pour but de réaliser un tel support qui présente, tant dans le sens axial que dans le sens transversal une raideur propre qui ne soit pas supérieure à celle d'un support ne comportant pas d'axe traversant, de manière à améliorer le filtrage des vibrations à haute fréquence, tout en conservant un bon amortissement des trépidations à basse fréquence et fortes amplitudes.

On rappellera à cet égard que la raideur propre d'u support hydroélastique peut être définie comme étant la raideur mesurée à pression intérieure constante.

Un autre objectif recherché par l'invention est que le support soit particulièrement simple à fabriquer.

A cet effet, l'invention a pour objet un support élastique du type défini ci-dessus caractérisé en ce que la chambre de travail annulaire est délimitée vers l'extérieur par une paroi élastique souple en forme de soufflet reliée de façon étanche à chacune des deux armatures, ladite paroi élastique souple ayant une section transversale en V dont la partie saillante est dirigée vers l'axe du support.

Suivant d'autres caractéristiques:

– il est prévu un jonc de renforcement logé dans la partie rentrante de ladite section en V et qui entoure la paroi élastique souple;
– ladite paroi élastique souple est venue de matière avec le corps et reliée à la paroi centrale épaisse par une membrane fixée sur une armature adjacente;
– l'une des armatures comprend une pièce intérieure fixée au corps en matériau élastomère et une pièce extérieure fixée à la paroi élastique souple, ces deux pièces étant solidaires de la cloison rigide de séparation entre les deux chambres;
– le corps en matériau élastomère, la paroi élastique souple, l'une des armatures et les pièces intérieure et extérieure de l'autre armature, constituent un sous ensemble;
- la chambre d'expansion étant délimitée entre la cloison rigide et une membrane annulaire souple, cette cloison et cette membrane sont fixées audit sous ensemble par sertissage des pièces intérieures et extérieures;
- la membrane souple étant protégée par un couvercle annulaire rigide, ce couvercle est fixé en même temps que la membrane et la cloison rigide, par sertissage des pièces intérieures et extérieures;
- la cloison rigide comprend une rondelle rerliant les pièces intérieure et extérieure et un disque délimitant avec ladite rondelle un conduit de communication entre les deux chambres de travail et d'expansion.

Notre demande de brevet européen EP-A 278 798, publiée le 17 août 1988, a trait à un support analogue, dans lequel la chambre de travail est delimitée vers l'extérieur par une mebrane semi-torique.

L'invention va être décrite plus en détail ci-dessous en se référant aux dessins annexés donnés uniquement à titre d'exemples et sur lesquels :

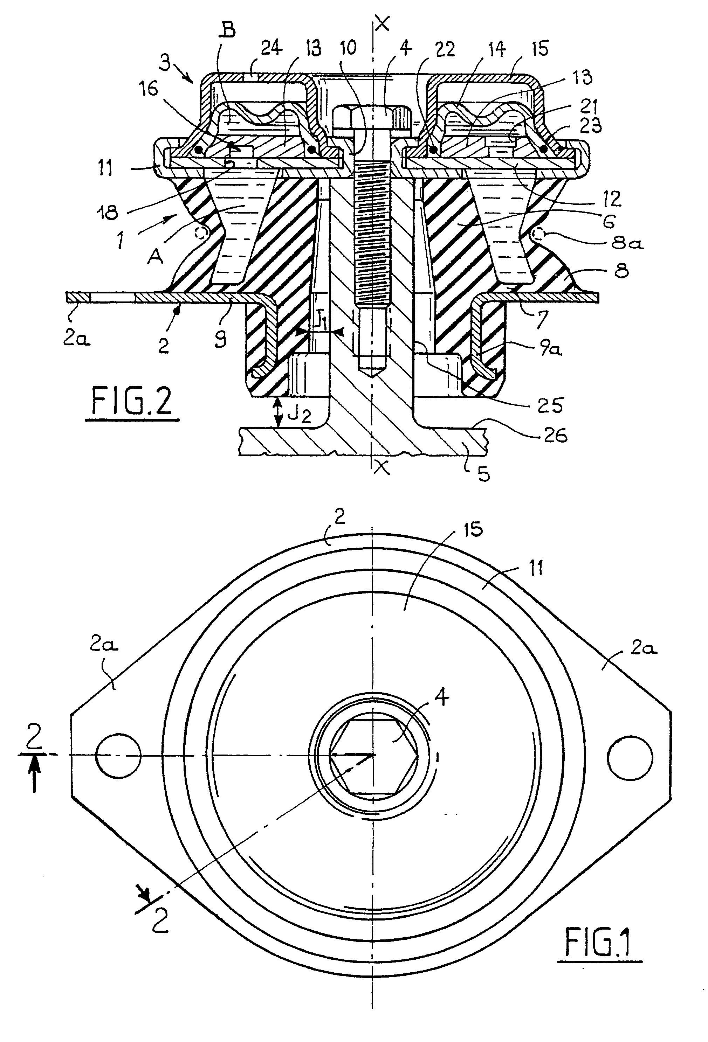

- la figure 1 est une vue de dessus d'un support suivant l'invention ;
- la figure 2 est une vue en coupe suivant la ligne 2-2 de la figure 1 ;
- la figure 3 est une vue de dessus d'une rondelle faisant partie du support représenté aux figures 1 et 2 ;
- la figure 4 est une vue en coupe selon la ligne 4-4 de la figure 3 ;
- la figure 5 est une vue de dessous d'une autre pièce faisant partie du support représenté aux figures 1 et 2 ; et
- la figure 6 est une vue en coupe selon la ligne 6-6 de la figure 5.

On a représenté aux dessins un support d'axe X-X comprenant un corps 1 réalisé en caoutchouc ou autre élastomère et de forme générale anulaire.

Ce corps est disposé entre deux armatures métalliques 2 et 3 destinées à être reliées, respectivement, à l'un des deux ensembles (non représentés) entre lesquels le support doit être interposé. Ces deux armatures s'étendent dans l'ensemble perpendiculairement à l'axe X-X. Dans le mode de rélisation représenté, l'armature 2 peut, par exemple, être reliée à la structure d'un véhicule au moyen de pattes de fixation 2a, tandis que l'armature 3 peut être reliée à un moteur au moyen d'une vis 4 et d'un pièce intermédiaire 5.

Pour la commodité de la description, on se référera ci-après à la disposition représentée aux dessins, pour désigner les parties inférieure ou supérieure du support. Cependant il va de soi qu'en utilisation, ce support peut être disposé avec une orientation différente de celle représentée aux dessins.

Le corps en élastomère comprend une paroi cen-

Le corps en élastomère comprend une paroi centrale annulaire ou un fût 6 ayant une épaiseur radiale relativement importante.

En un point intermédiaire de sa hauteur, la paroi 6 est venue de matière avec une paroi radiale 7 qui la relie à une paroi annulaire élastique souple 8 en forme de soufflet. De façon plus précise, dans le mode de rélisation représenté, cette paroi a une section transversale en V, dont la partie saillante est dirigée vers l'axe du support. De préférence, un jonc de renforcement 8a est disposé dans le fond ou dans la partie rentrante du V.

L'armature 2 est réalisée simplement à partir d'une plaque 9 emboutie pour délimiter une jupe cylindrique 9a noyée dans la partie inférieure du corps en élastomère, ainsi que les pattes de fixation (2a).

Les faces inférieures des parois 7 et 8 sont adhérisées sur la surface supérieure dde la palque 9.

A l'extrémité supérieure du corps, des faces d'extrémité de la paroi centrale et de la paroi extérieure sont adhérisées respectivement sur des pièces métalliques intérieure 10 et extérieure 11. Ces deux pièces, de forme annulaire, sont disposées dans un même plan et font partie de l'armature supérieure 3. Elles sont serties, le long du bord interne pour la pièce 10 et le long du bord externe pour la pièce 11, sur un ensemble comprenant une rondelle métallique 12, un disque 13, une membrane annulaire souple 14 et un couvercle 15.

Le volume annulaire délimité entre les parois 6 et 8 du corps en élastomère et la face inférieure de la rondelle 12 constitue une chambre de travail A, tandis que le volume délimité entre la surface supérieure du disque 13 et la membrane souple constitue une chambre d'expansion B.

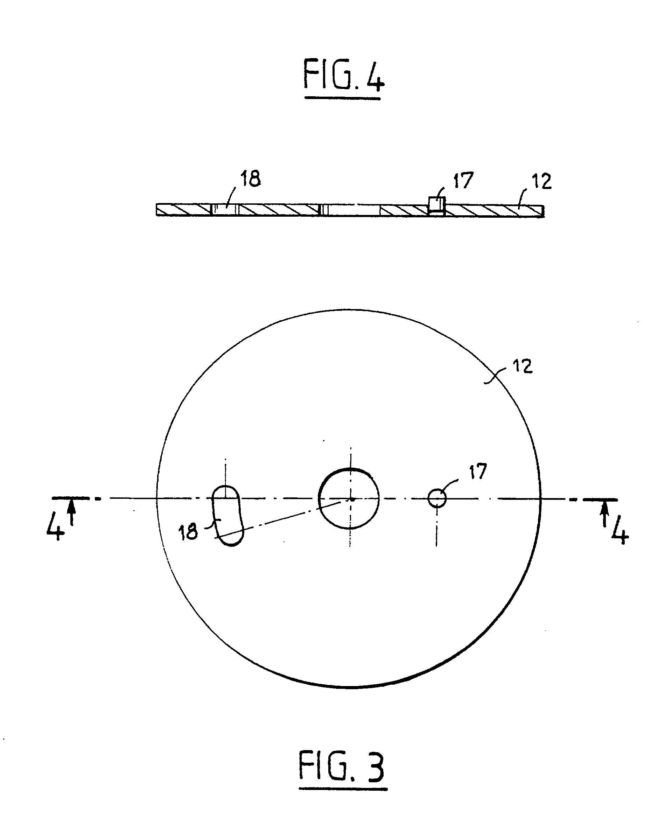

La rondelle 12 représentée plus en détail aux figures 3 et 4 assure la liason entre les deux pièces 10 et 11. De plus, elle délimite avec le disque adjacent 13 un conduit 16 de communication entre les chambres de travail et d'expansion. Cette rondelle comporte un pion 17 de centrage par rapport au disque 13 ainsi qu'une ouverture oblongue 18.

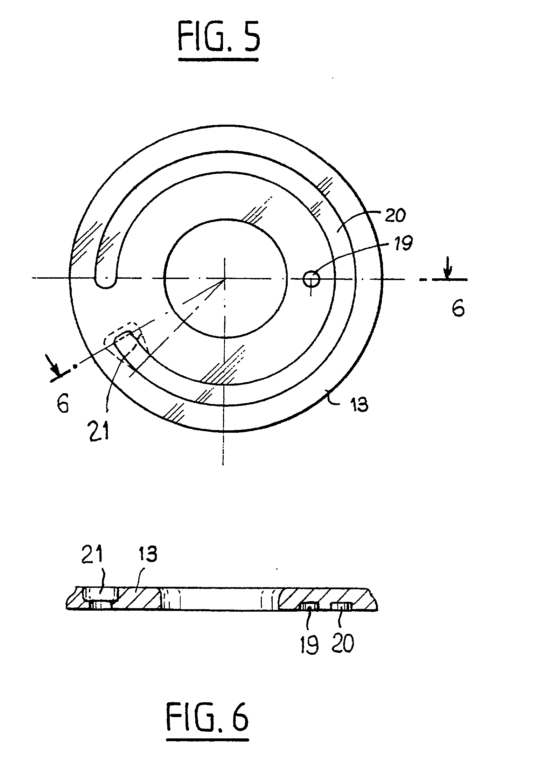

Le disque 13 réalisé en matière plastique, aluminium ou autre matériau est représenté plus en détail aux figures 5 et 6. Ce disque comporte un logement de centrage 19 destiné à coopérer avec le pion 17 de la rondelle. Sur sa face dirigée vers la rondelle, ce disque comporte une gorge 20 dont une extrémité se trouve en face de l'orifice 18 de la rondelle, tandis qu'à son autre extrémité, cette gorge débouche par un orifice 21, dans la chambre d'expansion. La longueur et la section du conduit 16 ainsi délimité détermine la valeur maximale de la fréquence de résonance de la colonne de liquide contenue dans ce conduit et le choix de ces paramètres permet donc d'obtenir la fréquence d'amortissement voulue.

La membrane 14 réalisée en caoutchouc est de préférence surmoulée sur deux joncs en matière plastique 22 et 23 pour faciliter le montage automatique et améliorer l'étanchéité au sertissage.

Comme connu en soi, le couvercle comporte un trou 24 afin de ne pas gêner les déformations de la membrane 14.

Le fonctionnement d'une telle cale est relativement classique et n'a donc pas à être décrit en détail. Par contre, la conception et la réalisation du support sont originales et méritent quelques développements.

Tout d'abord, la forme de soufflet donnée à la paroi extérieure délimitant la chambre de travail, est particulièrement avantageuse car elle présente une très grande efficacité dans les conditions de fonctionnement d'un tel support, qui peuvent s'assimiler à celles d'une pompe. La tenue à la pression est assurée par l'effet de voûte dû à la forme du pli du soufflet. Cet effet est encore amélioré grâce à la présence d'un jonc de renforcement 8a. Cette disposition permet donc d'obtenir une grande résistance à la pression. Par contre elle procure une grande souplesse vis-à-vis des déplacements axiaux et radiaux, du fait de l'articulation qui se produit au niveau du pli du soufflet. A cet effet l'épaisseur de la paroi peut être minimale dans cette zone.

La fabrication et le montage de ce support sont également très simples et avantageux :

On réalise tout d'abord un sous ensemble constitué par le corps en élastomère, l'armature 2 et les deux pièces intérieure 10 et extérieure 11. Les autres éléments constituant le support sont ensuite assemblés lors de l'opération de sertissage des bords respectivement intérieur et extérieur des pièces 10 et 11, ce sertissage étant effectué, comme cela est connu, après remplissage des chambres de travail et d'expansion avec un liquide hydraulique constitué par un mélange d'eau et de glycol. cette opération de sertissage est effectuée dans un environnement d'eau et de glycol, de façon à assurer le remplissage correct des deux chambres.

Il résulte de ces opérations de montage relativement simples, que la cale ainsi réalisée a un coût peu élevé, pour un produit intégrant toutes les fonctions de limitation de débattement et d'amortissement. En ce qui concerne la limitation des débattements, on indiquera simplement que les débattements radiaux sont déterminés par la valeur du jeu radial J1 ménagé entre la paroi interne du corps en élastomère et la surface adjacente 25 de la pièce 5;

Le débattement axial est limité par le rattrapage du jeu J2 entre l'extrémité inférieure du corps en élastomère et la partie adjacente 26 de la pièce 5.

Le débattement axial deans le sens opposé est limité simplement par la compression du corps élastique entre les deux armatures.

A titre de variante, on peut signaler que la paroi élastique souple délimitant la chambre de travail peut avoir la forme d'un soufflet à plusieurs plis. Bien entendu d'autres variantes peuvent interve ni quant à la forme ou à la réalisation de certains autres composants du support, sans pour autant sortir du cadre de cette invention.

**Revendications**

1. Support hydroélastique destiné à être interposé entre deux ensembles, tels que par exemple un groupe motopropulseur et la structure d'un véhicule, ce support comprenant un corps (1) en matériau élastomère, de forme annulaire, disposé entre deux armatures (2, 3) dont l'une (2) est adaptée pour être reliée à l'un des deux ensembles et dont l'autre (3) est adaptée pour être reliée à l'autre ensemble, par l'intermédiaire d'une pièce de fixation (4) qui traverse le support de part en part suivant son axe, le support comportant de plus une chambre de travail annulaire (A) remplie de fluide et délimitée en partie par le corps en matériau élastomère et une chambre d'expansion (B) également remplie de fluide, séparée de la chambre de travail par une cloison rigide délimitant au moins un passage (16) de communication entre les deux chambres, la chambre de travail annulaire étant délimitée radialement vers l'intérieur par une paroi öpaisse (6) du corps (1) en matériau élastomère, caractérisé en ce que la chambre de travail annulaire est délimitée vers l'extérieur par une paroi élastique souple (8) en forme de soufflet reliée de façon étanche à chacune des deux armatures, ladite paroi élastique souple (8) ayant une section transversale en V dont la partie saillante est dirigée vers l'axe du support.

2. Support suivant la revendication 1, caractérisé en ce qu'il est prévu un jonc de renforcement (8a) logé dans la partie rentrante de ladite section en V et qui entoure la paroi élastique souple (8).

3. Support suivant l'une quelconque des revendications précédentes, caractérisé en ce que ladite paroi élastique souple (8) est venue de matière avec le corps (1) et reliée à la paroi centrale épaisse par une membrane (7) fixée sur une armature (2) adjacente.

4. Support suivant l'une quelconque des revendications précédentes, caractérisé en ce que l'une (3) des armatures comprend une pièce intérieure (10) fixée au corps en matériau élastomère et une pièce extérieure (11) fixée à la paroi élastique souple (8), ces deux pièces étant solidaires de la cloison rigide de séparation entre les deux chambres.

5. Support suivant la revendication 4, caractérisé en ce que le corps en matériau élastomère, la paroi élastique souple, l'une des armatures et les pièces intérieure et extérieure de l'autre armature, constituent un sous ensemble.

6. Support suivant la revendication 5, caractérisé en ce que la chambre d'expansion étant délimitée entre la cloison rigide et une membrane annulaire souple (14), cette cloison et cette membrane sont fixées audit sous ensemble par sertissage des pièces intérieure (10) et extérieure (11).

7. Support suivant la revendication 1, caractérisé en ce que la membrane souple (14) étant protégée par un couvercle (15) annulaire rigide, ce couvercle (15) est fixé en même temps que la membrane (14) et la cloison rigide, par sertissage des pièces intérieure (10) et extérieure (11).

8. Support suivant la revendication 1, caractérisé en ce que la cloison rigide comprend une rondelle (12) reliant les pièces intérieure (10) et extérieure (11) et un disque (13) délimitant avec ladite rondelle un conduit de communication (16) entre les deux chambres de travail et d'expansion.

9. Support suivant l'une quelconque des revendications précédentes, caractérisé en ce que la paroi élastique souple (8) a une épaisseur minimale dans la zone du pli du soufflet.

## Patentansprüche

1. Hydroelastisches Lager zur Anordnung zwischen zwei Baugruppen wie beispielsweise dem Antriebsaggregat und dem Aufbau eines Fahrzeuges, welches Lager einen Körper (1) aus einem elastomeren Material in Ringform umfaßt, der zwischen zwei Beschlägen (2, 3) angeordnet ist, von denen der eine (2) mit einer der Baugruppen verbunden werden kann, während der andere (3) über ein dazwischen angeordnetes Befestigungsteil mit der anderen Baugruppe verbunden werden kann, das quer vollständig durch das Lager längs dessen Achse hindurchgeht, wobei das Lager weiterhin eine ringförmige Arbeitskammer (A), die mit einem Fluid gefüllt ist und teilweise vom Körper aus elastomerem Material begrenzt ist, und eine Expansionskammer (B) umfaßt, die gleichfalls mit dem Fluid gefüllt ist und von der Arbeitskammer über eine starre Zwischenwand getrennt ist, die wenigstens einen Verbindungskanal (16) zwischen den beiden Kammern begrenzt, und wobei die ringförmige Arbeitskammer radial zum Inneren über eine dicke Wand (6) des Körpers aus einem elastomeren Material begrenzt ist, dadurch gekennzeichnet, daß die ringförmige Arbeitskammer nach außen durch eine elastische biegsame Wand (8) in Form eines Faltenbalges begrenzt ist, der dicht mit jedem der beiden Beschläge verbunden ist, wobei die elastische biegsame Wand (8) einen V-förmigen Querschnitt hat, dessen Gratteil zur Achse des Lagers gerichtet ist.

2. Lager nach Anspruch 1, dadurch gekennzeichnet, daß es mit einem Verstärkungsring (8a) versehen ist, der in dem zurücklaufenden Teil des V-förmigen Querschnittes angeordnet ist und der die elastische biegsame Wand (8) umgibt.

3. Lager nach einem der vorhergehenden Ansprüche, dadurch gekennzeichnet, daß die elastische biegsame Wand (8) in einem Stück mit dem Körper (1) ausgebildet ist und mit der mittleren dicken Wand über eine Membran (7) verbunden ist, die an einem benachbarten Beschlag (2) befestigt ist.

4. Lager nach einem der vorhergehenden Ansprüche, dadurch gekennzeichnet, daß der eine Beschlag (3) ein Innenteil (10), das am Körper aus einem elastomeren Material befestigt ist, und ein Außenteil (11) umfaßt, das an der elastischen biegsamen Wand (8) befestigt ist, wobei beide Teile formschlüssig mit der starren Trennzwischenwand zwischen den beiden Kammern verbunden sind.

5. Lager nach Anspruch 4, dadurch gekennzeichnet, daß der Körper aus einem elastomeren Material, die elastische biegsame Wand, der eine Beschlag und das Innen- und das Außenteil des anderen Beschlages eine Unterbaugruppe bilden.

6. Lager nach Anspruch 5, dadurch gekennzeichnet, daß die Expansionskammer zwischen der starren Zwischenwand und einer ringförmigen biegsamen Membran (14) begrenzt ist, wobei die Zwischenwand und die Membran an der besagten Untergruppe über eine Quetschverbindung des Innenteils (10) und des Außenteils (11) befestigt sind.

7. Lager nach Anspruch 1, dadurch gekennzeichnet, daß die biegsame Membran (14) durch einen starren ringförmigen Deckel (15) geschützt ist, welcher Deckel (15) durch eine Quetschverbindung des Innenteils (10) und des Außenteils (11) gleichzeitig an der Membran (14) und der starren Zwischenwand befestigt ist.

8. Lager nach Anspruch 1, dadurch gekennzeichnet, daß die starre Zwischenwand einen Ring (12), der mit dem Innenteil (10) und dem Außenteil (11) verbunden ist, und eine Scheibe (13) umfaßt, die mit dem Ring eine Verbindungsleitung (16) zwischen der Arbeitskammer und der Expansionskammer begrenzt.

9. Lager nach einem der vorhergehenden Ansprüche, dadurch gekennzeichnet, daß die elastische dehnbare Wand (8) die kleinste Dicke im Bereich der Falte des Faltenbalges hat.

## Claims

1. A hydroelastic support adapted for interposition between two assemblies such as, for eyample, a power unit and the structure of a vehicle, the support comprising a body (1) of an elastomeric material of annular shape disposed between two frames (2, 3) one (2) of which is adapted to be connected to one of the two assemblies, the other (3) being adapted to be connected to the other assembly via a fixing member (4) extending continuously through the support along its axis, the support also comprising an annular working chamber (A) filled with fluid and partly bounded by the body of elastomeric material and an expansion chamber (B) also filled with fluid and separated from the working chamber by a rigid partition bounding at least one passage (16) for communication between the two chambers, the annular working chamber being bounded radially inwards by a thick wall (6) of the body (1) of elastomeric material, characterized in that the annular working chamber is bounded radially outwards by a flexible elastically yielding wall (8) in the form of bellows hermetically connected to each of the two frames, said flexible elastically yielding wall (8) having a V-shaped cross-section whose projecting portion is directed towards the axis of the support.

2. A support according to claim 1, characterized in that a reinforcing ring (8a) is provided which is received in the re-entrant portion of said V-shaped section and encloses the flexible elastically yielding wall (8).

3. A support according to any of the preceding claims, characterized in that the flexible elastically yielding wall (8) is made in one piece with the body (1) and connected to the thick central wall via a membrane (7) fixed to an adjacent frame (2).

4. A support according to any of the preceding claims, characterized in that one (3) of the frames comprises an inner member (10) fixed to the body of elastomeric material and an outer member (11) fixed to the flexible elastically yielding wall (8), said two members being connected to the rigid partition separating the two chambers.

5. A support according to claim 4, characterized in that the body of elastomeric material, the flexible elastically yielding wall, one of the frames and the inner and outer members of the other frame form a subassembly.

6. A support according to claim 5, characterized in that the expansion chamber is bounded by the rigid partition and a flexible annular membrane (14), and said partition and said membrane are fixed to said subassembly by the crimping-over of the inner member (10) and the outer member (11).

7. A support according to claim 1, characterized in that the flexible membrane (14) is protected by a rigid annular cover (15), and said cover (15) is fixed at the same time as the membrane (14) and the rigid partition, by the crimping-over of the inner member (10) and the outer member (11).

8. A support according to claim 1, characterized in that the rigid partition comprises a washer (12) connecting the inner member (10) and the outer member (11) and a disc (13) which cooperates with said washer to bound a duct (16) for communication between the working chamber and the expansion chamber.

9. A support according to any of the preceding claims, characterized in that the flexible elastically yielding wall (8) has a minimum thickness in the zone of the fold of the bellows.

EP 0 287 455 B1

FIG.2

FIG.1

# FIG. 4

18    17    12

# FIG. 3

12

17

18

4    4

# FIG. 5

# FIG. 6